# FASCICULE DE BREVET EUROPEEN

(11) **EP 0 840 867 B1**
(45) Date de publication et mention de la délivrance du brevet: **04.07.2001**
(21) Numéro de dépôt: 96926451.4
(22) Date de dépôt: 23.07.1996
(51) Int. Cl.: F16L 33/207, F16L 33/18

(54) **DISPOSITIF DE RACCORDEMENT ETANCHE ENTRE UN EMBOUT DE TUBE RIGIDE ET UN TUYAU SOUPLE ET PROCEDE DE FABRICATION D'UN TEL DISPOSITIF**
VORRICHTUNG ZUM DICHTEN VERBINDEN EINES STARREN ROHRENDSTÜCKES MIT EINEM SCHLAUCH UND HERSTELLUNGSVERFAHREN FÜR EINE SOLCHE VORRICHTUNG
DEVICE FORMING A LEAK-PROOF CONNECTION BETWEEN A RIGID TUBE END AND A FLEXIBLE PIPE, AND METHOD FOR MAKING SAME

(30) Priorité: 24.07.1995 FR 9508937
(43) Date de publication de la demande: 13.05.1998
(73) Titulaire: MANULI AUTO FRANCE, 28000 Chartres (FR)
(72) Inventeur: BARON, Daniel, F-28630 Fontenay-sur-Eure (FR); BRACHET, Michel, F-28000 Chartres (FR)
(74) Mandataire: Benech, Frédéric
(86) Numéro de dépôt international: FR9601161
(87) Numéro de publication internationale: WO9704266

(56) Documents cités:
- CH-A- 474 715
- GB-A- 534 235
- US-A- 2 489 890
- US-A- 3 479 713
- US-A- 3 549 180
- US-A- 4 522 435
- US-A- 5 370 425

## Description

La présente invention concerne un dispositif de raccordement étanche entre un embout de tube rigide et l'extrémité d'un tuyau souple, flexible, par sertissage d'une partie en forme de douille métallique sur l'extrémité du tuyau.

Elle concerne également un procédé de fabrication d'un tel dispositif de raccordement étanche.

Elle trouve une application particulièrement importante bien que non exclusive dans le domaine des raccordements de circuits refroidisseurs, de circuits de climatisation et/ou de systèmes de direction assistée de véhicule automobile.

On connaît déjà des dispositifs de raccordement étanche entre un embout de tube rigide et un tuyau souple en élastomère, par exemple en caoutchouc.

L'embout de tube rigide est en général directement emmanché à force sur le tuyau souple autour duquel une douille métallique est sertie.

Un tel montage nécessite cependant plusieurs opérations différentes dont une opération d'enfoncement longitudinal du tuyau souple sur l'embout préalablement usiné, et une opération de sertissage radial.

Afin de simplifier ces opérations le brevet US-A-5 417 461 propose la mise en place de l'extrémité du tuyau directement en butée dans l'embout, un insert muni d'une collerette d'extrémité avec joint ayant préalablement été assemblé au tuyau, la collerette et le tuyau étant sertis simultanément dans l'embout en une seule opération.

Si le montage d'un tel dispositif est ainsi facilité, cela se fait au détriment de la résistance aux vibrations.

On connaît également ( US-A-3 479 713 ; US-A-5 370 425 ) des dispositifs comportant des embouts avec inserts soudés qui, s'ils permettent une meilleure étanchéité et une tenue aux vibrations améliorée, sont compliqués à mettre en oeuvre notamment du fait du soudage.

De façon générale les dispositifs connus présentent des inconvénients.

Ils ne garantissent pas toujours une bonne étanchéité notamment lorsqu'ils sont utilisés avec certains fluides frigorigènes, comme par exemple avec du liquide connu sous la référence 134a + huile PAG.

Par ailleurs, les constructeurs automobiles ne cessent de relever leurs exigences concernant la résistance à l'usure et aux conditions d'environnement difficiles des dispositifs de raccordement utilisés sur leurs véhicules.

Ainsi les systèmes connus à ce jour ne permettent notamment pas de conserver une étanchéité suffisante lors d'essais d'endurance qui peuvent comporter plus de 150.000 cycles de fonctionnement à des températures pouvant varier entre -35°C et +150°C.

La présente invention vise à fournir un dispositif de raccordement, et un procédé de fabrication d'un dispositif de raccordement, répondant mieux que ceux antérieurement connus aux exigences de la pratique, notamment en ce qu'elle permet une fabrication simple, rapide et répétitive, avec une grande souplesse d'adaptation, en ce qu'elle garantit un écrasement optimum du tuyau en matière souple sans l'endommager, et ce en permettant d'obtenir le résultat recherché, à savoir une meilleure étanchéité du dispositif de raccordement, le tout avec une excellente tenue aux vibrations, pour un coût optimisé.

Dans ce but la présente invention propose notamment un dispositif de raccordement étanche entre un embout de tube rigide et l'extrémité d'un tuyau souple, par sertissage d'une partie en forme de douille métallique sur ladite extrémité, l'embout de tube rigide comprenant une partie terminale comportant un épaulement de plus grand diamètre que le tube, ledit dispositif comportant un insert rigide évidé de bout en bout par un alésage, ledit insert comprenant d'un côté une partie tubulaire insérée en force dans l'extrémité du tuyau en vis à vis de la portion sertie de la partie en forme de douille métallique, et de l'autre côté une partie munie d'une collerette externe de forme complémentaire, et en butée, avec l'épaulement, ladite collerette étant prolongée, de l'autre côté de ladite partie tubulaire par rapport à la collerette, par un embout d'extrémité tubulaire, caractérisé en ce que l'alésage de l'insert est cylindrique et en ce que l'embout d'extrémité tubulaire est inséré en force sur une longueur déterminée dans une partie non déformée de l'embout de tube rigide et comprend des moyens d'étanchéité par joint.

Avantageusement la longueur déterminée est supérieure à de l'ordre de 1 cm, par exemple 2 cm, ou comprise entre le 1/4 et le 1/10 de la longueur de la partie tubulaire insérée dans le tuyau, de préférence entre le 1/5 et le 1/8, par exemple de l'ordre du 1/6.

Dans des modes de réalisation avantageux, on a de plus recours à l'une et/ou à l'autre des dispositions suivantes :
- la partie en forme de douille est constituée par la partie terminale du tube ;
- la partie en forme de douille est constituée par un manchon d'extrémité rapporté, fixé de façon inamovible sur l'embout de tube rigide ;
- le manchon est fixé sur le tube par coincement entre deux pliures de la paroi du tube ;
- le manchon est fixé sur le tube par coincement entre une pliure de la paroi du tube et un élargissement de la partie terminale dont la paroi interne constitue l'épaulement ;
- le tuyau est un tuyau en matière composite avec âme tubulaire rigide ;
- la partie tubulaire de l'insert insérée en force dans l'extrémité de tuyau comporte des moyens d'étanchéité par joint ;
- les moyens d'étanchéité par joint comportent des joints spéciaux obtenus par surmoulage avec adhérence sur l'insert ;
- les moyens d'étanchéité par joint comportent au moins une gorge annulaire équipée d'un joint torique d'étanchéité ;
- le tube est en alliage d'aluminium et l'insert est en acier ;
- la paroi externe de la partie tubulaire de l'insert insérée en force dans l'extrémité de tuyau comprend plusieurs cannelures ou gorges annulaires de sorte que l'adhérence au tuyau par rapport au sertissage extérieur est augmentée.

L'invention concerne également un procédé de fabrication d'un dispositif de type décrit ci-dessus.

Plus particulièrement elle concerne aussi un procédé de fabrication d'un dispositif de raccordement étanche entre un embout de tube rigide et l'extrémité d'un tuyau souple, par sertissage d'une partie en forme de douille métallique sur ladite extrémité, caractérisé en ce que :
- après constitution d'un épaulement sur la partie terminale de l'embout de tube rigide par exemple par élargissement dudit embout,
- on introduit en force dans une partie non déformée de l'embout, au delà de l'épaulement, un embout d'extrémité de longueur déterminée, muni d'un joint, d'un insert évidé de bout en bout par un alésage cylindrique, ledit insert étant muni d'une collerette externe, jusqu'à venir en butée de ladite collerette avec l'épaulement,
- on introduit en force l'autre extrémité tubulaire de l'insert dans l'extrémité de tuyau,
- et on sertit la partie en forme de douille métallique solidaire de l'embout de tube, sur le tuyau.

La présente invention sera mieux comprise à la lecture de la description qui suit de modes de réalisation particuliers donnés à titre d'exemples non limitatifs.

Elle se réfère aux dessins qui l'accompagnent dans lesquels :
- La figure 1 est une vue en deux demi-coupes longitudinales montrant respectivement, avant et après sertissage, un premier mode de réalisation du dispositif selon l'invention.
- La figure 2 est une vue en deux demi-coupes longitudinales montrant respectivement, avant et après sertissage, un deuxième mode de réalisation selon l'invention, comprenant une douille de sertissage rapportée.
- La figure 3 est une vue en deux demi-coupes longitudinales montrant respectivement, avant et après sertissage, une variante du mode de réalisation de l'invention représenté sur la figure 2.

Dans la suite de la description, et s'il y a lieu, les mêmes numéros de référence seront utilisés pour désigner les mêmes éléments.

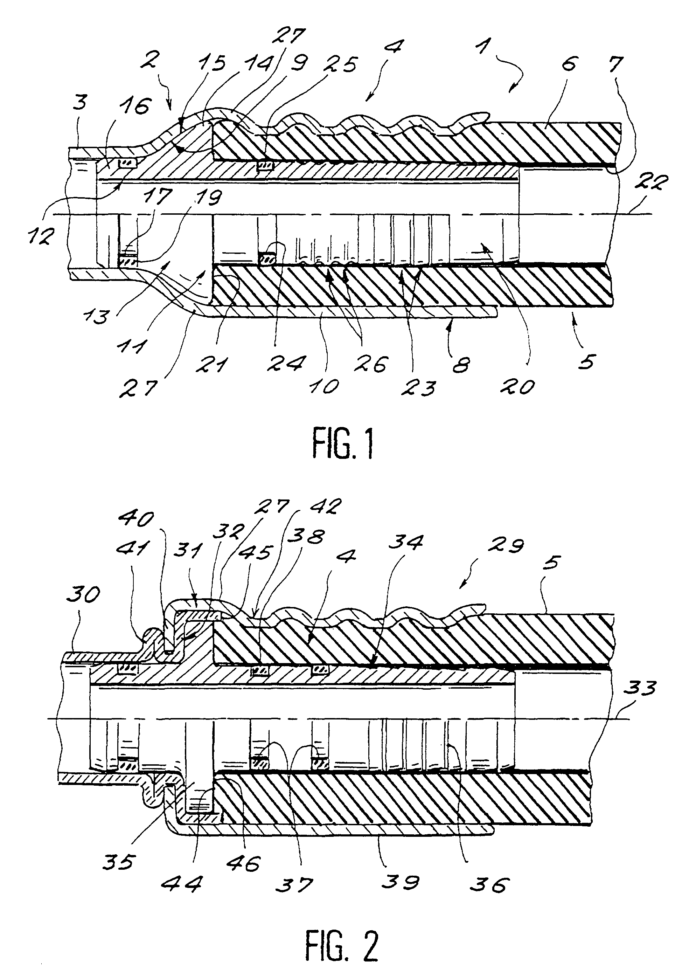

La figure 1 montre un dispositif 1 de raccordement étanche entre un embout 2 de tube rigide 3 par exemple en aluminium et l'extrémité 4 d'un tuyau 5 souple, en matériau composite.

Le tuyau 5 est constitué d'une enveloppe externe cylindrique en élastomère 6, par exemple en caoutchouc, et d'une âme cylindrique 7, en matériau rigide comme par exemple une matière plastique connue sous la dénomination NYLON.

Mais dans d'autres modes de réalisation particuliers, le tuyau n'a pas d'âme rigide et/ou comporte une tresse cylindrique intermédiaire.

L'embout 2 est élargi à sa partie terminale 8 pour former avec sa face interne un épaulement 9 de forme tronconique, entre le diamètre intérieur nominal du tube et jusqu'à un diamètre compris entre 1,1 et 2,5 fois le diamètre intérieur, par exemple compris entre 1,5 fois et 2 fois le diamètre intérieur nominal du tube.

L'élargissement est par exemple obtenu par passage de plusieurs poinçons, par exemple trois passes ou étapes successives.

Le demi angle de conicité de la partie tronconique est par exemple compris entre de l'ordre de 20° et de l'ordre de 40°, par exemple de l'ordre de 30°, comme représenté sur la figure 1.

Dans le mode de réalisation de l'invention plus particulièrement décrit ici, cet élargissement est effectué sur une longueur de l'embout compris entre 20 mm et 60 mm, par exemple sur 40 mm, pour constituer une partie 10 en forme de douille.

Le dispositif 1 comporte également un insert rigide 11 en acier ou en polymère renforcé, évidé de bout en bout par un alésage cylindrique 12. L'insert comprend d'un côté une partie 13 munie d'une collerette 14 dont la face externe supérieure 15 est de forme complémentaire et en butée avec l'épaulement 9.

L'insert comporte de plus, dans le prolongement et inséré à force, par exemple lors de la troisième passe décrite ci-dessus, dans la partie non déformée du tube 3 de diamètre intérieur déterminé, à partir de la collerette 14, un embout d'extrémité tubulaire 16 solidaire, ou d'une pièce, avec ladite collerette et le reste de l'insert, par exemple de l'ordre de 5 mm de longueur, comprenant une gorge périphérique annulaire 17 munie d'un joint torique 19.

L'insertion en force se fait avec un serrage compris entre 0,1 mm et 0,2 mm au diamètre.

Un tel montage permet d'obtenir une étanchéité renforcée, malgré le grippage attendu et les risques de coincement du joint.

Le diamètre de l'embout d'extrémité tubulaire 16 est par ailleurs sensiblement égal ou légèrement supérieur, par exemple d'1 mm ou de 2 mm, au diamètre externe de la partie tubulaire 20.

L'insert comprend de l'autre côté une partie tubulaire 20 insérée en force dans l'extrémité 4 du tuyau 5 jusqu'à venir en butée sur la face 21 de la collerette 14, par exemple perpendiculaire à l'axe 22 du dispositif.

La partie 20 comprend plusieurs gorges par exemple cinq gorges 23 en queue de sapin pour faciliter l'adhérence du tuyau, une gorge annulaire 24 équipée d'un joint torique 25 et/ou des joints spéciaux HNBR, butyle ou équivalent, directement obtenus par surmoulage avec adhérence sur le support acier constitué par la paroi externe de l'insert et/ou plusieurs gorges rondes 26.

L'insert est par exemple usiné soit par tournage, soit par roulage à partir de tubes avant d'être équipé de systèmes d'étanchéité par joints toriques ou joints spéciaux comme cela vient d'être décrit.

La configuration retenue permet une grande souplesse d'adaptation du dispositif.

En effet, la forme de l'insert en acier peut être travaillée différemment en fonction du tuyau à raccorder, par exemple avec des gorges queue de sapin, des gorges rondes, des gorges en créneaux, etc.

Elle permet une utilisation sans joint torique ou avec un seul joint ou encore plusieurs joints, sans changer le procédé général de fabrication.

La matière en élastomère des joints peut être adaptée en fonction des produits à véhiculer.

Enfin, le dispositif selon l'invention peut être décliné, ici encore de façon simple et adaptable, dans toutes les dimensions standards connues (en millimètres) : 5/16, 13/32, 1/2, 5/8, 3/4, à partir des tubes standards du marché de diamètres : 9,52 ; 12,7 ; 15,88 ; 19,05 ou pour les tubes à diamètre millimétrique : 10, 13, 16, 20 mm.

Enfin, un sertissage, par exemple avec trois ou quatre dents, de la partie 10 en forme de douille sur l'extrémité 4 du tuyau souple 5 est réalisé.

La tenue mécanique du tuyau et de l'insert à l'arrachement longitudinal, lors d'un effort de traction mécanique dû ou non à la pression, est par ailleurs assurée par ce sertissage, grâce notamment à la dent 27, qui retient l'insert dont la collerette 14 est bloquée de l'autre côté par l'épaulement 9.

Les gorges 23 augmentent quant à elles l'adhérence du tuyau par rapport au sertissage extérieur.

La figure 2 montre un dispositif de raccordement 29 selon un autre mode de réalisation de l'invention, entre un tube 30 comprenant une partie terminale élargie 31 par exemple cylindrique et l'extrémité 4 du tuyau 5.

La partie 31 est munie d'un côté d'une face 32 perpendiculaire à l'axe 33 du dispositif et située dans le plan radial de celui-ci formant un épaulement interne.

Elle est entièrement ouverte de l'autre côté, de sorte qu'elle forme une coupelle ou couronne radiale autour de l'alésage 28 du tube, munie d'un bord périphérique cylindrique d'axe 33.

Le dispositif 29 comprend un insert 34 en acier, muni d'un embout d'extrémité avec gorge et joint torique du type décrit en référence à la figure 1, inséré en force dans le tube en aval de la partie terminale, la collerette 35 par exemple de forme annulaire cylindrique étant en butée sur la face 32 de la partie élargie.

La partie tubulaire 36 de l'insert est quant à elle insérée en force dans le tuyau et comprend, en plus des gorges en queue de sapin, deux gorges annulaires 37 avec joints toriques 38.

Le dispositif 29 comprend un manchon 39 métallique, par exemple en aluminium, en forme de cloche cylindrique terminée d'un côté par une paroi d'extrémité 40 percée d'un orifice circulaire centré autour de l'axe 33 du dispositif et de diamètre interne correspondant sensiblement au diamètre externe du tube 30 auquel il est fixé, par exemple par coincement de la paroi 40 entre une pliure 41 de la paroi dudit tube d'un côté et par la paroi située dans le plan radial de la partie élargie de l'autre côté.

Le manchon 39 est ensuite serti sur le tuyau avec la force nécessaire pour obtenir une bonne étanchéité, soit avec une compression de l'ordre de 30 à 55 % en volume du tuyau, par exemple supérieure à 40 %, par exemple de l'ordre de 45 %, compte tenu de l'existence de la contre pression appliquée à l'intérieur du tuyau par l'insert.

Le renfoncement 42 du sertissage bloque par ailleurs longitudinalement l'insert en position via la butée de la face 44 de l'extrémité du tuyau, appuyant également sur le bord périphérique 45 de la partie élargie, avec la face externe 46 de la collerette.

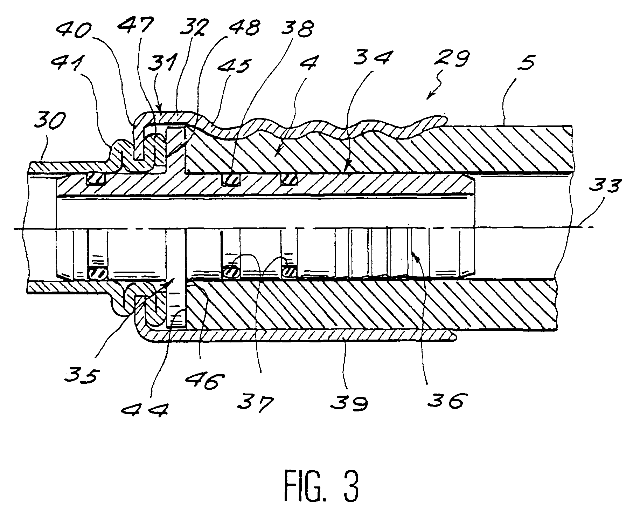

Sur la figure 3 on a représenté un autre mode de réalisation de fixation du manchon 39 sur le tube 30, par coincement de la paroi 40 entre deux pliures 41 et 47 de la paroi du tube, la face externe 48 de la deuxième pliure 47 constituant alors l'épaulement sur lequel la collerette 35 est en butée.

On va maintenant décrire sommairement le procédé de fabrication du dispositif 1 en référence à la figure 1.

On élargit tout d'abord la partie terminale de l'embout de tube, puis on introduit l'insert en force dans le tube, l'insert ayant été préalablement préparé avec ses joints d'étanchéité, on introduit en force le tuyau sur le tube et on sertit.

Comme il va de soi et comme il résulte d'ailleurs de ce qui précède, l'invention ne se limite pas aux modes de réalisation plus particulièrement décrits.

Elle en embrasse au contraire toutes les variantes et notamment celles où l'insert est en matière plastique moulée rigide et/ou renforcée, celles où le tube est en acier ou en un autre métal que l'aluminium ou un alliage d'aluminium, celles où le tuyau souple est par exemple renforcé par des armatures et/ou comprend une enveloppe externe de protection, celles où il est prévu de plus une fixation par collage de l'insert sur le tube, et celles où la partie tubulaire de l'insert introduite dans le tuyau s'étend sensiblement au delà de la partie sertie.

## Revendications

1. Dispositif (1, 29) de raccordement étanche entre un embout de tube rigide (3, 30) et l'extrémité (4) d'un tuyau souple (5), par sertissage d'une partie (8, 39) en forme de douille métallique sur ladite extrémité,
l'embout de tube rigide comprenant une partie terminale (8, 31) comportant un épaulement (9, 32, 48) de plus grand diamètre que le tube,
ledit dispositif comportant un insert (11, 34) rigide évidé de bout en bout par un alésage, ledit insert comprenant d'un côté une partie tubulaire (20, 36) insérée en force dans l'extrémité (4) du tuyau en vis à vis de la portion sertie de la partie en forme de douille métallique, et de l'autre côté une partie (13) munie d'une collerette (14, 35) externe de forme complémentaire, et en butée, avec l'épaulement (9, 32, 48), ladite collerette étant prolongée, de l'autre côté de ladite partie tubulaire par rapport à la collerette (14, 35), par un embout d'extrémité tubulaire (16),
caractérisé en ce que l'alésage de l'insert (11, 34) est cylindrique et en ce que l'embout d'extrémité (16) est inséré en force sur une longueur déterminée dans une partie non déformée de l'embout du tube rigide (3, 30) et comprend des moyens d'étanchéité par joint (19).

2. Dispositif selon la revendication 1,
caractérisé en ce que l'épaulement est tronconique avec un demi angle de conicité compris entre de l'ordre de 20° et de l'ordre de 40°.

3. Dispositif selon l'une quelconque des revendications précédentes, caractérisé en ce que ladite longueur déterminée est comprise entre le 1/4 et le 1/8 de la longueur de la partie tubulaire (20, 36).

4. Dispositif selon l'une quelconque des revendications précédentes, caractérisé en ce que la partie en forme de douille est constituée par la partie terminale (8) du tube.

5. Dispositif selon l'une quelconque des revendications 1 à 3, caractérisé en ce que la partie en forme de douille est constituée par un manchon (39) d'extrémité rapporté, fixé de façon inamovible sur l'embout de tube rigide.

6. Dispositif selon la revendication 5,
caractérisé en ce que le manchon est fixé sur le tube (30) par coincement entre deux pliures (41, 47) de la paroi du tube, l'épaulement étant formé par la face externe (48) de la deuxième pliure.

7. Dispositif selon la revendication 5,
caractérisé en ce que le manchon est fixé sur le tube (30) par coincement entre une pliure (41) de la paroi du tube et un élargissement de la partie terminale dont la paroi interne (32) constitue l'épaulement.

8. Dispositif selon l'une quelconque des revendications précédentes, caractérisé en ce que le tuyau (5) est en matériau composite avec âme tubulaire rigide.

9. Dispositif selon l'une quelconque des revendications précédentes, caractérisé en ce que la partie tubulaire (20, 36) de l'insert insérée en force dans le tuyau comporte des moyens (24, 25, 37, 38) d'étanchéité par joint.

10. Dispositif selon l'une quelconque des revendications précédentes, caractérisé en ce que le tube (3, 30) est en alliage d'aluminium et l'insert (11, 34) est en acier.

11. Dispositif selon l'une quelconque des revendications précédentes, caractérisé en ce que la paroi externe de la partie tubulaire (20, 36) de l'insert insérée en force dans l'extrémité de tuyau comprend plusieurs cannelures (23) ou gorges (26) de sorte que l'adhérence au tuyau par rapport au sertissage extérieur est augmenté.

12. Procédé de fabrication d'un dispositif (1, 29) de raccordement étanche entre un embout de tube rigide (30) et l'extrémité (4) d'un tuyau souple (5), par sertissage d'une partie (8, 39) en forme de douille métallique sur ladite extrémité, caractérisé en ce que :
- après constitution d'un épaulement (9, 32, 48) sur la partie terminale de l'embout de tube rigide,
- on introduit en force dans une partie non déformée de l'embout au delà de l'épaulement, un embout d'extrémité (16) de longueur déterminée, muni d'un joint (19), d'un insert (11, 34) évidé de bout en bout par un alésage cylindrique, ledit insert étant muni d'une collerette externe (14, 35), jusqu'à venir en butée avec l'épaulement (9, 32, 48),
- on introduit en force l'autre extrémité tubulaire de l'insert dans l'extrémité (4) de tuyau,
- et on sertit la partie (8, 39) en forme de douille métallique solidaire de l'embout de tube, sur le tuyau (5).

## Patentansprüche

1. Vorrichtung (1, 29) zur dichten Verbindung zwischen einem Endstutzen eines starren Rohres (3, 30) und dem Ende (4) eines flexiblen Schlauches (5) durch eine Bördelverbindung eines Teils (8, 39) in Form einer Metallhülse auf dem Ende,
wobei der Endstutzen des starren Rohrs ein Endteil (8, 31) mit einer Schulter (9, 32, 48) mit einem größeren Durchmesser als dem des Rohres aufweist
und die Vorrichtung einen starren Einsatz (11, 34) mit einer durchgehenden Bohrung und der Einsatz auf einer Seite ein röhrenförmiges
Teil (20, 36) enthält, das stramm in das Ende (4) des Schlauches im Bereich des Ausgangsteils des Teils in Form einer Metallhülse eingesetzt ist und an der anderen Seite ein mit einem Bund (14, 35) versehenes Teil (13) mit einer komplementären Außenform versehen ist und an der Schulter (9, 32, 48) anliegt und der Bund an der gegenüber dem Bund (14, 35) anderen Seite des röhrenförmigen Teils durch einen röhrenförmigen Endstutzen (16) verlängert ist,
**dadurch gekennzeichnet,**
**dass** die Bohrung des Einsatzes (11, 34) zylinderförmig ausgebildet ist und der Endstutzen (16) über eine Länge stramm eingesetzt ist, die durch einen nicht verformten Teil des Endstutzens des starren Rohres (3, 35) bestimmt ist und Dichtungsmittel (19) aufweist.

2. Vorrichtung nach Anspruch 1,
**dadurch gekennzeichnet,**
**dass** die Schulter kegelstumpfförmig mit einem Halbwinkel der Konizität in der Größenordnung zwischen 20° und 40° ausgebildet ist.

3. Vorrichtung nach einem der vorangehenden Ansprüche,
**dadurch gekennzeichnet,**
**dass** die bestimmte Länge zwischen 1/4 und 1/8 der Länge des röhrenförmigen Teils (20, 36) liegt.

4. Vorrichtung nach einem der vorangehenden Ansprüche,
**dadurch gekennzeichnet,**
**dass** das hülsenförmige Teil durch das Endteil (8) des Rohres gebildet ist.

5. Vorrichtung nach einem der Ansprüche 1 bis 3,
**dadurch gekennzeichnet,**
**dass** das hülsenförmige Teil durch eine Muffe (39) am Zusammensetzende gebildet ist, die unlösbar auf dem Endstutzen des starren Rohres befestigt ist.

6. Vorrichtung nach Anspruch 5,
**dadurch gekennzeichnet,**
**dass** die Muffe auf dem Rohr (30) durch Einklemmung zwischen zwei Ausbördelungen (41, 47) der Rohrwand befestigt und die Schulter durch die Außenfläche (48) der zweiten Ausbördelung gebildet ist.

7. Vorrichtung nach Anspruch 5,
**dadurch gekennzeichnet,**
**dass** die Muffe auf dem Rohr (30) durch Einklemmung zwischen einer Ausbördelung (41) der Rohrwand und einer Erweiterung des Endteils befestigt ist, dessen Innenwand (32) die Schulter bildet.

8. Vorrichtung nach einem der vorangehenden Ansprüche,
**dadurch gekennzeichnet,**
**dass** der Schlauch (5) aus einem Verbundwerkstoff mit einer starren röhrenförmigen Verstärkung besteht.

9. Vorrichtung nach einem der vorangehenden Ansprüche,
**dadurch gekennzeichnet,**
**dass** das röhrenförmige Teil (20, 36) des stramm in den Schlauch eingesetzten Einsatzes Dichtungsmittel (24, 25, 37, 38) enthält.

10. Vorrichtung nach einem der vorangehenden Ansprüche,
**dadurch gekennzeichnet,**
**dass** das Rohr (3, 30) aus einer Aluminiumlegierung und der Einsatz (11, 34) aus Stahl besteht.

11. Vorrichtung nach einem der vorangehenden Ansprüche,
**dadurch gekennzeichnet**,
**dass** die Außenwand des röhrenförmigen Teils (20, 36) des stramm in das Ende des Schlauches eingesetzten Einsatzes mehrere Riffellungen (23) oder Rillen (26) enthält, derart, dass die Haftung an dem Schlauch durch die äußere Bördelverbindung verbessert wird.

12. Verfahren zur Herstellung einer Vorrichtung (1, 29) zur dichten Verbindung zwischen einem Endstutzen eines starren Rohres (30) und dem Ende (4) eines flexiblen Schlauches (5) durch eine Bördelverbindung eines Teils (8, 39) in Form einer Metallhülse auf dem Ende,
**dadurch gekennzeichnet,**
**dass** nach der Bildung einer Schulter (9, 32, 48) auf dem Endteil des Endstutzens des starren Rohres in einem nicht verformten Teil des Endstutzens unterhalb der Schulter ein mit einer Dichtung (19) versehener Endstutzen (16) mit vorbestimmter Länge eines Einsatzes (11, 34), der sich vom Anfang bis zum Ende durch eine zylinderförmige Bohrung erstreckt, wobei der Einsatz mit einem äußeren Bund (14, 35) versehen ist, eingesetzt wird, bis er gegen die Schulter (9, 32, 48) stößt,
**dass** das andere röhrenförmige Ende des Einsatzes in das Ende (4) des Schlauches stramm eingesetzt wird und
**dass** das Teil (8, 39) in Form einer Metallhülse, die mit dem Rohrstutzen ein Teil bildet, auf den Schlauch (5) aufgeschoben wird.

## Claims

1. Device (1, 29) for a leak-proof connection between a rigid tube end (3, 30) and the extremity (4) of a flexible hose (5), by crimping a portion (8, 39) in the shape of a metal bushing on to said extremity,
the rigid tube end comprising an end portion (8, 31) having a shoulder (9, 32, 48) with a larger diameter than the tube,
said device having a rigid insert (11, 34) hollowed out from end to end by a bore hole, said insert comprising on one side a tubular portion (20, 36) force-fitted into the extremity (4) of the hose opposite the crimped part of the portion in the form of a metal bushing, and on the other side a portion (13) provided with an outer flange (14, 35) having a matching shape and, abutting against the shoulder (9, 32, 48), said flange being extended, on the other side of said tubular portion from the flange (14, 35), by a tubular end piece (16),
characterised in that the bore hole of the insert (11, 34) is cylindrical and in that the end piece (16) is force-fitted over a predetermined length into a non deformed portion of the rigid tube end (3, 30) and comprises sealing means using a seal (19).

2. Device according to Claim 1, characterised in that the shoulder has the shape of a truncated cone with a half-angle of conicity comprised between a value of the order of 20° and of the order of 40°.

3. Device according to any one of the preceding claims, characterised in that said predetermined length is comprised between one quarter and one eighth of the length of the tubular portion (20, 36).

4. Device according to any one of the preceding claims, characterised in that the portion in the form of a bushing is constituted by the end portion (8) of the tube.

5. Device according to any one of Claims 1 to 3, characterised in that the portion in the form of a bushing is constituted by a folded-over end sleeve (39), fixed non-removably to the rigid tube end.

6. Device according to Claim 5, characterised in that the sleeve is fixed to the tube (30) by being wedged between two folds (41, 47) on the wall of the tube, the shoulder being formed by the outer face (48) of the second fold.

7. Device according to Claim 5, characterised in that the sleeve is fixed to the tube (30) by being wedged between a fold (41) on the tube wall and a widening of the end portion, the inner wall (32) of which constitutes the shoulder.

8. Device according to any one of the preceding claims, characterised in that the hose (5) is made of composite material with a rigid tubular core.

9. Device according to any one of the preceding claims, characterised in that the tubular portion (20, 36) of the insert force-fitted into the hose comprises sealing means (24, 25, 37, 38) using a seal.

10. Device according to any one of the preceding claims, characterised in that the tube (3, 30) is made of aluminium alloy and the insert (11, 34) is made of steel.

11. Device according to any one of the preceding claims, characterised in that the outer wall of the tubular portion (20, 36) of the insert force-fitted into the extremity of the hose comprises several areas of fluting (23) or grooves (26) such that adhesion to the hose is greater than the external crimping.

12. Method for manufacturing a device (1, 29) for a leak-proof connection between a rigid tube end (30) and the extremity (4) of a flexible hose (5), by crimping a portion (8, 39) in the form of a metal bushing on to said extremity, characterised in that:
- after a shoulder (9, 32, 48) is constituted on the end portion of the rigid tube end,
- an end piece (16) of predetermined length, provided with a seal (19), of an insert (11, 34), hollowed out from end to end by a bore hole, is force-fitted into a non-deformed portion of the tube end beyond the shoulder, said insert being provided with an outer flange (14, 35), until it abuts against the shoulder (9, 32, 48),
- the other tubular extremity of the insert is force-fitted into the extremity (4) of the hose,
- and the portion (8, 39), in the form of a metal bushing integral with the tube end, is crimped to the hose (5).
